# EUROPÄISCHE PATENTSCHRIFT

(11) **EP 0 795 500 B1**
(45) Veröffentlichungstag und Bekanntmachung des Hinweises auf die Patenterteilung: **13.11.2002**
(21) Anmeldenummer: 97100759.6
(22) Anmeldetag: 18.01.1997
(51) Int. Cl.: B65G 47/84

(54) **Transportstern für Gefässe**
Starwheel for containers
Roue à étoile pour récipients

(30) Priorität: 13.03.1996 DE 29604535 U; 02.05.1996 DE 29607937 U
(43) Veröffentlichungstag der Anmeldung: 17.09.1997
(73) Patentinhaber: Kronseder, Hermann, Dr.-Ing. E.h., 93086 Wörth/Donau (DE)
(72) Erfinder: Kronseder, Hermann, Dr.-Ing. E.h., 93086 Wörth/Donau (DE)

(56) Entgegenhaltungen:
- DE-U- 29 501 897

## Beschreibung

Die Erfindung betrifft einen Transportstern für Gefäße gemäß dem Oberbegriff des Anspruchs 1.

Es ist bereits ein derartiger Transportstern bekannt, bei dem die Greifarme aus zähelastischem Kunststoff bestehen und als einstückige Doppelhebel ausgebildet sind (DE-GM 295 01 897.6). Die so ermöglichte elastische Durchbiegung der Greifarme wird zum einen benötigt, um beim Erfassen der Gefäße die nötige Klemmkraft aufzubauen und zum anderen, um die als Drehnocken ausgebildeten Spreizkörper in Verbindung mit kerbenartigen Ausnehmungen in den Gegenflächen in den Schließpositionen selbsthaltend zu stabilisieren. Aufgrund der Herstellung als einstückiges Kunststofformteil sind die Greifarme des bekannten Transportsterns äußerst kostengünstig herzustellen. Unvorteilhaft ist, daß ihre Elastizität im Laufe der Zeit nachläßt und sie aufgrund der begrenzten Verformbarkeit nur für einen ganz bestimmten, eng tolerierten Gefäßdurchmesser brauchbar sind.

Der Erfindung liegt die Aufgabe zugrunde, bei einem Transportstern der eingangs genannten Art mit einfachen Mitteln die Gebrauchsdauer der Greifarme und den Durchmesserbereich der zu verarbeitenden Gefäße wesentlich zu vergrößern.

Diese Aufgabe wird erfindungsgemäß durch die im Kennzeichen des Anspruchs 1 angegebenen Merkmale gelöst.

Bei einem erfindungsgemäßen Transportstern müssen die Greifarme selbst bzw. deren Teilstücke beim Erfassen der Gefäße nicht verformt werden. Verformt werden die elastischen Elemente, die im Sinne einer langen Lebensdauer und eines großen Durchmesserbereichs speziell an ihren einzigen Verwendungszweck angepaßt werden können.

Es ist daher ohne weiteres möglich, gemäß dem Anspruch 2 die Teile der Greifarme biegesteif auszuführen, so daß die elastische Verformung und Erzeugung der Spannkraft ausschließlich durch die Federelemente erfolgt.

Andere vorteilhafte Weiterbildungen der Erfindung sind in den übrigen Unteransprüchen enthalten.

Im Nachstehenden wird ein Ausführungsbeispiel der Erfindung anhand der Zeichnungen beschrieben. Es zeigen:
- Fig. 1: die teilweise Draufsicht auf einen Transportstern
- Fig. 2: den Schnitt A B nach Fig. 1.
- Fig. 3: den Schnitt A B bei einer anderen Ausführungsform eines Transportsterns
- Fig. 4: die Ansicht Z nach Fig. 3.

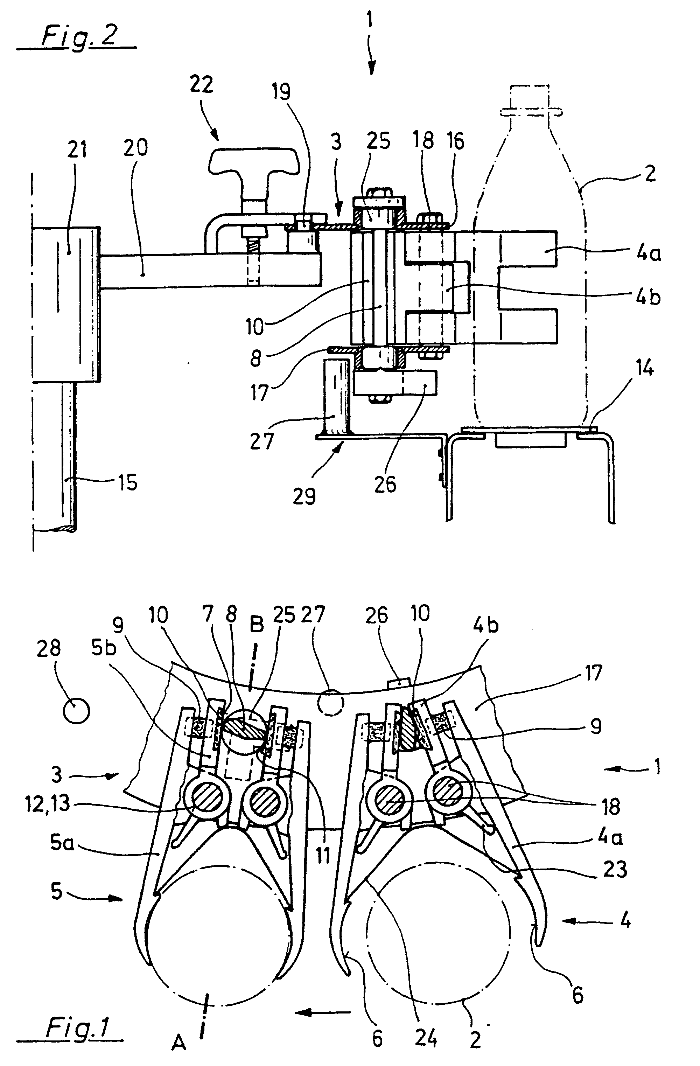

Der Transportstern 1 nach Fig. 1 und 2 ist zum Transportieren von aufrecht stehenden Gefäßen in Form von Flaschen 2 eingerichtet. Er ist in den Einlauf einer Flaschenbehandlungsmaschine, beispielsweise einer Inspektionsmaschine, integriert, von der ansonsten nur der Zuförderer 14 und die Antriebswelle 15 für den Transportstern 1 dargestellt ist.

Der Transportstern 1 weist einen Grundkörper 3 auf, der im wesentlichen aus zwei parallelen, kreisförmigen Ringen 16, 17 besteht. Die beiden Ringe 16, 17 haben den gleichen Außendurchmesser; die Innendurchmesser sind unterschiedlich, wobei der Innendurchmesser des oberen Ringes 16 kleiner ist als der Innendurchmesser des unteren Ringes 17. Die beiden Ringe 16, 17 sind konzentrisch angeordnet und durch eine Anzahl von über ihren Umfang verteilten Paaren von Bolzen 18 mit kreisförmigem Querschnitt starr miteinander verbunden. Jeder Bolzen 18 ist mittels zweier Schrauben einzeln lösbar zwischen den beiden Ringen 16, 17 fixiert.

Der obere Ring 16 weist an seiner Innenseite gleichmäßig über den Umfang verteilt mehrere Löcher auf, die auf Zapfen 19 sitzen. Diese sind ihrerseits an den Enden von mehreren radialen Armen 20 einer Nabe 21 befestigt, die drehfest mit der Antriebswelle 15 verbunden ist. Mittels mehrerer auf den oberen Ring 16 einwirkender manueller Klemmvorrichtungen 22 ist der Grundkörper 3 auf den Armen 20 lösbar festgeklemmt und mit seiner Mittelachse konzentrisch zur Antriebswelle 15 ausgerichtet.

Auf jedem Bolzen 18 ist ein Greifarm 4, 5 schwenkbar gelagert. Die beiden Greifarme 4, 5 eines Paares von zusammengehörigen Bolzen 18 sind spiegelbildlich nach Art von Doppelhebeln ausgebildet und bilden zusammen eine Greifzange, welche eine Flasche 2 kraft- und formschlüssig zu erfassen vermag.

Jeder Greifarm 4, 5 weist zwei Teilstücke a und b auf, die z.B. aus hartem, hochfestem Kunststoff oder Metall bestehen und daher in sich biegesteif sind. Die jeweils ersten Teilstücke 4a, 5a sind als Doppelhebel ausgebildet, die in ihrem unteren und oberen Randbereich unter Bildung einer mittigen Aussparung direkt auf den Bolzen 18 schwenkbar gelagert sind. An ihren radial nach außen weisenden Enden sind die ersten Teilstücke 4a, 5a mit aufeinander zuweisenden, schalenartigen Greifflächen 6 für die Flaschen 2 versehen. Die jeweils zweiten Teilstücke 4b, 5b jedes Greifarms 4, 5 sind im wesentlichen als einfache Hebel ausgebildet, die in ihrem mittleren Höhenbereich in der Aussparung der ersten Teilstücke 4a, 5a gleichfalls direkt auf den Bolzen 18 schwenkbar gelagert sind. An ihren radial nach innen weisenden Enden sind die zweiten Teilstücke 4b, 5b mit aufeinander zuweisenden Gegenflächen 7 für einen Spreizkörper 8 versehen. Die Gegenflächen 7 sind an Einsätzen 10 aus hochverschleißfestem Kunststoff ausgebildet, welche mittels Schwalbenschwanzführungen lösbar bzw. austauschbar an den Teilstücken 4b, 5b befestigt sind.

Aufgrund der vorstehend beschriebenen Lagerungen sind die Teilstücke 4a, b; 5a, b jedes Greifarms 4, 5 sowohl gemeinsam als auch unabhängig voneinander schwenkbar. Die Bolzen 18 bilden also sowohl Schwenklager 13 für die Greifarme 4, 5 als ganzes als auch Gelenke 12 für die Relativbewegung der Teilstücke 4a, b; 5a, b untereinander. Diese Relativbewegung wird in einer Richtung durch an den zweiten Teilstücken 4b, 5b ausgebildete Anschläge 23 begrenzt.

Zwischen die radial nach innen weisenden, im wesentlichen parallel verlaufenden Bereiche der Teilstücke 4a, 4b; 5a, b sind Federelemente 9 in Form von länglichen Kissen aus elastischem Kunststoff, beispielsweise Silikon, in entsprechende Vertiefungen an den Teilstücken eingesetzt. Die Federelemente 9 erstrecken sich über die gesamte Höhe der Greifarme 4, 5 und versuchen die Teilstücke 4a, b; 5a, b auseinanderzudrücken, soweit dies die Anschläge 23 zulassen. Die Federelemente 9 sind unmittelbar hinter den Einsätzen 10 mit den Gegenflächen 7 angeordnet und ermöglichen eine elastische Relativbewegung zwischen den Teilstücken 4a, b; 5a, b, wobei die Gelenke 12 funktionsmäßig zwischen den Gegenflächen 7 und den Greifflächen 6 sitzen und konzentrisch zu den Schwenklagern 13 der Greifarme 4, 5 angeordnet sind. Ferner sind zwischen die Teilstücke 4a, 5a zweier zusammengehöriger Greifarme 4, 5 im Anschluß an die Greifflächen 6 V-förmige Federbleche 24 eingespannt, welche die Greifarme 4, 5 im Bereich der Greifflächen 6 auseinanderzudrücken suchen bzw. die Greifarme 4, 5 im Öffnungssinne vorspannen.

Parallel zu jedem Paar von Bolzen 18 und zwar mittig zwischen den Teilstücken 4b, 5b zweier zusammengehöriger Greifarme 4, 5 ist in den Ringen 16, 17 jeweils eine Steuerwelle 25 drehbar gelagert. Diese weist im Höhenbereich zwischen den Ringen 16, 17 einen nockenförmigen Spreizkörper 8 mit im wesentlichen ovalem Querschnitt auf, der durch entsprechende, teilweise parallel verlaufende Abflachungen der Steuerwelle 25 direkt gebildet wird. Liegt der Spreizkörper 8 mit seinen parallelen Seitenflächen im wesentlichen radial zur Drehachse des Transportsterns 1, so definiert er die Öffnungsposition der Greifarme 4, 5, da in diesem Falle die Gegenflächen 7 maximal angenähert und die Greifflächen 6 maximal voneinander entfernt sind (Fig. 1, rechte Seite). Dabei liegen die Gegenflächen 7 unter dem Einfluß des Federblechs 24 an den Seitenflächen des Spreizkörpers 8 an und die Flaschen 2 können ungehindert zwischen die geöffneten Greifarme 4, 5 einlaufen. Die Federelemente 9 übertragen hierbei die von den Federblechen 24 auf die Teilstücke 4a, 5a ausgeübte Kraft auf die Teilstücke 4b, 5b.

Liegt der Spreizkörper 8 mit seinen parallelen Seitenflächen im wesentlichen tangential zur Drehachse des Transportsterns 1, so definiert er die Schließposition der Greifarme 4, 5, da in diesem Falle die Gegenflächen 7 maximal voneinander entfernt und die Greifflächen 6 maximal angenähert sind (Fig. 1, linke Seite). Ist keine Flasche 2 vorhanden, so liegen die Gegenflächen 7 allein unter dem Einfluß des gespannten Federblechs 24 an den schmalen Stirnflächen des Spreizkörpers 8 an, wobei durch eine Erhebung 11 an einer der beiden Gegenflächen 7 der Spreizkörper 8 geringfügig über dem Totpunkt fixiert und so selbsthemmend stabilisiert wird. Auch in diesem Falle wird die vom Federblech 24 erzeugte Kraft durch die Federelemente 9 übertragen, die dabei ggf. leicht komprimiert werden. Der Abstand zwischen den Greifflächen 6 ist geringer als der kleinste zu verarbeitende Flaschendurchmesser.

Ist in der Schließposition des Spreizkörpers 8 bzw. der Greifarme 4, 5 zwischen diesen eine Flasche 2 vorhanden, so nehmen die Teilstücke 4b, 5b mit den Gegenflächen 7 die gleiche Lage ein. Die Teilstücke 4a, 5a sind jedoch im Bereich der Greifflächen 6 weiter voneinander entfernt, ermöglicht durch die Gelenke 12. Dies hat eine stärkere Kompression der Federelemente 9 zur Folge, die so die erforderliche Klemmkraft zum sicheren Halten der Flaschen 2 erzeugen. Die Auslegung ist z.B. derart gewählt, daß die Greifarme 4, 5 Flaschen 2 im Durchmesserbereich von 60 bis 70 Millimeter fest ergreifen können, ohne daß hierbei die Federelemente 9 mehr als um ein Drittel zusammengepreßt werden. Dies hat eine nahezu unbegrenzte Lebensdauer der Federelemente 9 zur Folge. Trotzdem können Flaschen 2 in einem größeren Durchmesserbereich ohne Umstellen oder Austauschen des Transportsterns 1 problemlos transportiert werden. Die durch die Kompression der Federelemente 9 aufgebaute Klemmkraft wirkt zusätzlich stabilisierend auf den Spreizkörper 8, der somit sowohl in der Öffnungsposition als auch in der Schließposition stabil ist und keine zusätzlichen Haltemittel erfordert.

Das untere Ende jeder Steuerwelle 25 ragt etwas aus dem unteren Ring 17 heraus. Auf diesen vorstehenden Enden sind winkelförmige Steuerhebel 26 befestigt. Diese wirken mit stationär unterhalb des Transportsterns 1 angeordneten Anschlagbolzen 27, 28 zusammen. Der erste Anschlagbolzen 27 ist an der Innenseite der Umlaufbahn der Steuerwellen 25 angeordnet. Er schwenkt einen in Pfeilrichtung mit dem Transportstern 1 vorbeilaufenden Spreizkörper 8 um ca. 90 Grad aus der Öffnungsposition in die Schließposition. Der zweite Anschlagbolzen 28 ist an der Außenseite der Umlaufbahn der Steuerwellen 25 angeordnet. Er schwenkt einen vorbeilaufenden Spreizkörper 8 um ca. 90 Grad aus der Schließposition in die Öffnungsposition. Durch die Anordnung weiterer starrer oder auch höhengesteuerter Anschlagbolzen ist an jeder beliebigen Stelle der Umlaufbahn des Transportsterns 1 ein zuverlässiges Öffnen und Schließen der Greifarme 4, 5 möglich. Die Flaschen 2 können so ohne zusätzliche Führungsbögen usw. gezielt von einem Zuförderer 14 an einen nicht gezeigten Drehtisch überführt oder vom Drehtisch an mehrere verschiedene Abförderer übergeben bzw. sortiert oder an einen gleichartigen Transportstern mit höhenversetzten Greifarmen übergeben werden.

Auch ist es möglich, nur einen Greifarm mit Gelenk 12 und Federelement 9 auszustatten, den anderen Greifarm ohne Gelenk, d.h. starr auszubilden und/oder drehfest am Grundkörper anzuordnen und/oder durch ein Getriebe mit Drehrichtungsumkehr mit dem gefederten Greifarm zu koppeln. Weiter ist es denkbar, jedem Greifarm einen eigenen Spreizkörper zuzuordnen.

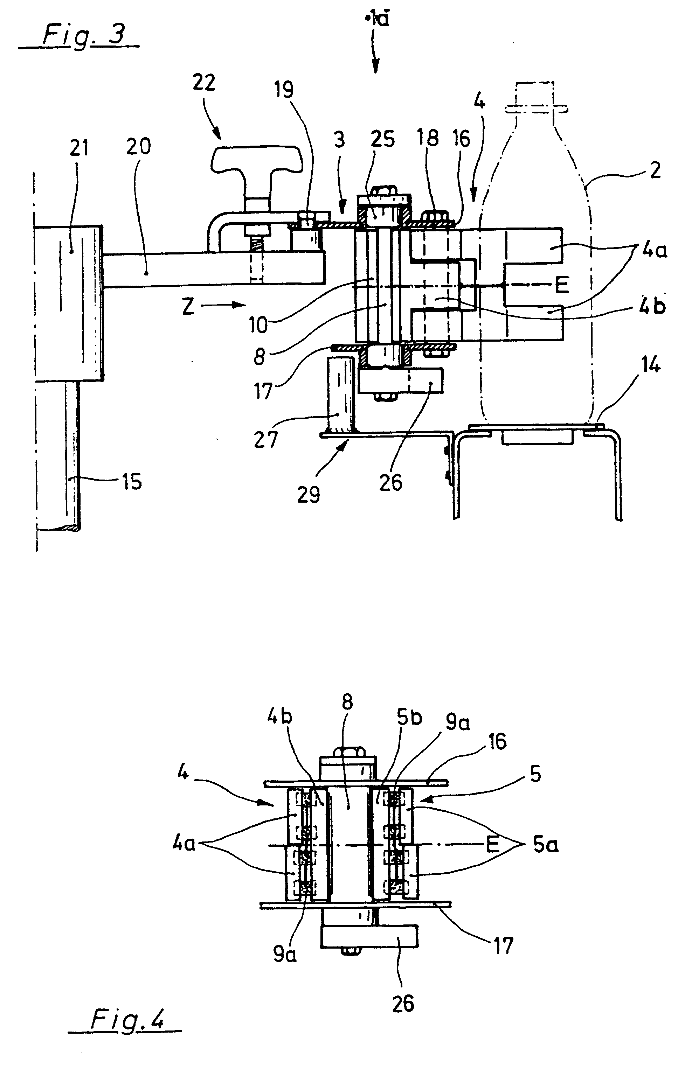

Der Transportstern 1a nach Fig. 3 und 4 unterscheidet sich vom Transportstern 1 nach Fig. 1 und 2 dadurch, daß die doppelhebelartigen Teilstücke 4a, 5a jedes Greifarms 4, 5 in einer horizontalen, senkrecht zu den Schwenkachsen der Greifarme 4, 5 verlaufenden Schnittebene E im mittleren Höhenbereich durchgehend getrennt sind. Jeder Greifarm 4, 5 weist somit zwei doppelhebelförmige Teilstücke 4a, 5a auf, die relativ zueinander verschwenkbar sind. Die einfachhebelförmigen Teilstücke 4b, 5b dagegen sind nicht getrennt.

Die beiden jeweils zusammengehörigen Teilstücke 4a, 5a stützen sich über ein Federelement 9a auf dem zugehörigen einzigen Teilstück 4b, 5b ab. Wie die Fig. 4 zeigt, weist jedes Federelement 9a vier elastische, zylindrische Kissen auf, die durch einen dünnen, flexiblen Steg miteinander verbunden sind. Jeweils zwei elastische Kissen wirken mit den oberen Teilstücken 4a, 5a zusammen, während die beiden anderen elastischen Kissen mit dem unteren Teilstück 4a, 5a zusammenwirken. Die beiden Teilstücke 4a, 5a jedes Greifarms 4, 5 können sich somit separat an die Kontur einer ergriffenen Flasche 2 anpassen, wenn der an den Teilstücken 4b, 5b angreifende Spreizkörper 8 seine Schließposition einnimmt. Dabei können die elastischen Kissen der Federelemente 9a durchaus unterschiedlich komprimiert werden, wie die Fig. 4 zeigt. Auf diese Weise können auch sog. Kontur- oder Formflaschen mit von der Zylinderform abweichenden Oberfläche zuverlässig erfaßt und fixiert werden.

## Patentansprüche

1. Transportstern (1) für Gefäße (2) mit einem drehbaren Grundkörper (3) und mehreren an dessen Umfang schwenkbar gelagerten Greifarmen (4, 5) in Form von Doppelhebeln, an deren radial nach außen weisenden Enden Greifflächen (6) für die Gefäße und an deren radial nach innen weisenden Enden Gegenflächen (7) für beweglich im Grundkörper gelagerte Spreizkörper (8) ausgebildet sind, welche die Gegenarme in einer die Gefäße erfassenden Schließposition selbsthaltend verriegeln, **dadurch gekennzeichnet, dass** die Greifarme (4, 5) aus mindestens zwei gelenkig miteinander verbundenen Teilstücken (4a, b; 5a, b) bestehen, von denen mindestens eines die Greiffläche (6) und ein anderes die Gegenfläche (7) trägt, und dass an den Teilstücken (4a, b; 5a, b) mindestens ein Federelement (9, 9a) so angreift, dass eine elastische Relativbewegung über dieses Federelement (9, 9a) zwischen den Teilstücken (4a, b; 5a, b) ermöglicht wird und das Federelement (9, 9a) in der Schließposition des Greifarms (4, 5) elastisch verformt ist.

2. Transportstern nach Anspruch 1, **dadurch gekennzeichnet, daß** die Teilstücke (4a, b; 5a, b) der Greifarme (4, 5) in sich biegesteif sind.

3. Transportstern nach Anspruch 1 oder 2, **dadurch gekennzeichnet, daß** die Gegenflächen (7) für die Spreizkörper (8) an lösbar an den zugehörigen Teilstücken (4b, 5b) der Greifarme (4, 5) befestigten Einsätzen (10) aus verschleißfestem Material ausgebildet sind.

4. Transportstern nach Anspruch 3, **dadurch gekennzeichnet, daß** die Einsätze (10) mit Erhebungen (11) und/oder Vertiefungen zur Fixierung der Spreizkörper (8) in der Schließposition versehen sind.

5. Transportstern nach einem der Ansprüche 1 bis 4, **dadurch gekennzeichnet, daß** die Gelenke (12) zwischen den Teilstücken (4a, b; 5a, b) der Greifarme (4, 5) konzentrisch zu den Schwenklagern (13) der Greifarme (4, 5) angeordnet sind.

6. Transportstern nach einem der Ansprüche 1 bis 5, **dadurch gekennzeichnet, daß** die Federelemente (9, 9a) durch auf Druck beanspruchte Kissen oder Leisten aus elastischem Material gebildet werden.

7. Transportstern nach Anspruch 5 oder 6, **dadurch gekennzeichnet, daß** jeder Greifarm (4, 5) mindestens ein erstes Teilstück (4a, 5a) in Form eines Doppelhebels und ein zweites Teilstück (4b, 5b) in Form eines Einfachhebels aufweist, und daß das Federelement (9, 9a) zwischen benachbarte Bereiche der Teilstücke (4a, b; 5a, b) eingesetzt ist.

8. Transportstern nach Anspruch 7, **dadurch gekennzeichnet, daß** die doppelhebelförmigen Teilstücke (4a, 5a) die Greiffläche (6) und die einfachhebelförmigen Teilstücke (4b, 5b) die Gegenfläche (7) tragen.

9. Transportstern nach Anspruch 7 oder 8, **dadurch gekennzeichnet, daß** die einfachhebelförmigen Teilstücke (4b, 5b) im wesentlichen radial nach innen verlaufen.

10. Transportstern nach einem der Ansprüche 1 bis 9, **dadurch gekennzeichnet, daß** die Spreizkörper (8) durch Nocken gebildet werden, die parallel zu den Schwenkachsen der Greifarme (4, 5) drehbar im Grundkörper (3) gelagert sind.

11. Transportstern nach Anspruch 10, **dadurch gekennzeichnet, daß** der Spreizkörper (8) drehfest mit einem Steuerhebel (26) verbunden ist, der zusammen mit ortsfest an der Umlaufbahn des Transportsterns (1) starr oder steuerbar angeordneten Anschlagbolzen (27, 28) eine Verdrehung des Spreizkörpers (8) und damit ein Öffnen bzw. Schließen der Greifarme (4, 5) bewirkt.

12. Transportstern nach einem der Ansprüche 1 bis 11, **dadurch gekennzeichnet, daß** jeder Greifarm (4, 5) mindestens zwei erste Teilstücke (4a, 5a) aufweist, die relativ zueinander schwenkbar sind.

13. Transportstern nach Anspruch 12, **dadurch gekennzeichnet, daß** alle doppelhebelförmigen Teilstücke (4a, 5a) eines Greifarms (4, 5) sich über mindestens ein Federelement (9a) auf dessen einzigem einfachhebelförmigen Teilstück (4b, 5b) abstützen.

## Claims

1. A star wheel (1) for containers (2) comprising a revolving base element (3) together with a plurality of gripper arms (4, 5) in the form of double levers which are swivel-mounted on its circumference, surfaces (6) for gripping the containers being formed on the radially outward-pointing ends of said gripper arms (4, 5) and on their radially inward-pointing ends co-operating surfaces (7) being provided for spreader elements (8) which are displaceably mounted in the base element and which, in a self-locking manner, latch the co-operating arms in a closed position for the purpose of grasping the containers,
**characterized in that**
the gripper arms (4, 5) consist of at least two parts (4a, b; 5a, b) hinged together, of which at least one bears the gripping surface (6) and another the co-operating surface (7),
and **in that** at least one spring element (9, 9a) acts upon the parts (4a, b; 5a, b) so that an elastic relative movement between the parts (4a, b; 5a, b) is enabled by way of this spring element (9, 9a) and the spring element (9, 9a) is elastically deformed in the closed position of the gripper arm (4, 5).

2. A star wheel according to Claim 1, **characterized in that** the parts (4a, b; 5a, b) of the gripper arms (4, 5) are in themselves resistant to bending.

3. A star wheel according to Claim 1 or 2, **characterized in that** the co-operating surfaces (7) for the spreader elements (8) are formed from wear-resistant material on inserts (10) which are detachably fixed to the related parts (4b, 5b) of the gripper arms (4, 5).

4. A star wheel according to Claim 3, **characterized in that** the inserts (10) are provided with projections (11) and/or recesses for fixing the spreader elements (8) in the closed position.

5. A star wheel according to one of Claims 1 to 4, **characterized in that** the links (12) between the parts (4a, b; 5a, b) of the gripper arms (4, 5) are disposed concentrically in relation to the swivel bearings (13) of the gripper arms (4, 5).

6. A star wheel according to one of Claims 1 to 5, **characterized in that** the spring elements (9, 9a) are formed by pressurized cushions or strips of elastic material.

7. A star wheel according to Claim 5 or 6, **characterized in that** each gripper arm (4, 5) has at least one first part (4a, 5a) in the form of a double lever and one second part (4b, 5b) in the form of a single lever, and **in that** the spring element (9, 9a) is inserted between adjacent areas of said parts (4a, b; 5a, b).

8. A star wheel according to Claim 7, **characterized in that** the parts (4a, 5a) in the form of double levers bear the gripping surface (6) and the parts (4b, 5b) taking the form of single levers bear the co-operating surface (7).

9. A star wheel according to Claim 7 or 8, **characterized in that** the parts (4b, 5b) taking the form of single levers substantially extend radially inwards.

10. A star wheel according to one of Claims 1 to 9, **characterized in that** the spreader elements (8) are formed by cams, which are mounted in the base element (3) so as to swivel parallel to the swivelling axes of the gripper arms (4, 5).

11. A star wheel according to Claim 10, **characterized in that** the spreader element (8) is connected to a control lever (26) in such a way as to be resistant to torsion, said control lever (26), together with stationary stop bolts (27, 28) which are rigidly or controllably disposed on the circular path of the star wheel (1), producing a rotation of the spreader element (8) and thus an opening or closing of the gripper arms (4, 5).

12. A star wheel according to one of Claims 1 to 11, **characterized in that** each gripper arm (4, 5) has at least two first parts (4a, 5a), which can swivel in relation to one another.

13. A star wheel according to Claim 12, **characterized in that** all parts (4a, 5a) of a gripper arm (4, 5) which are in the form of double levers are supported by way of at least one spring element (9a) on its single part taking the form of a single lever (4b, 5b).

## Revendications

1. Etoile de transport (1) pour des récipients (2), comportant un corps de base (3) rotatif et plusieurs bras de préhension (4, 5) montés pivotants à sa périphérie, ces bras étant sous la forme de leviers doubles dont les extrémités radialement extérieures comportent des surfaces de préhension (6) pour les récipients et dont les extrémités radiales intérieures comportent des surfaces antagonistes (7) pour les organes d'écartement (8) montés de manière mobile dans le corps de base, et qui verrouillent les bras antagonistes de façon autobloquante dans une position de fermeture correspondant à la prise des récipients,
**caractérisée en ce que**
les bras de préhension (4, 5) sont formés d'au moins deux pièces (4a, b ; 5a, b) reliées de manière articulée l'une à l'autre et dont au moins l'une porte la surface de préhension (6) et l'autre la surface opposée (7), et
les pièces (4a, b ; 5a, b) sont soumises à l'action d'au moins un élément de ressort (9, 9a) de façon à permettre un mouvement relatif élastique par cet élément de ressort (9, 9a) entre les pièces (4a, b ; 5a, b) et que l'élément de ressort (9, 9a) se déforme élastiquement dans la position de fermeture du bras de préhension (4, 5).

2. Etoile de transport selon la revendication 1,
**caractérisée en ce que**
les pièces (4a, b ; 5a, b) des bras de préhension (4, 5) sont rigides en flexion.

3. Etoile de transport selon la revendication 1 ou 2,
**caractérisée en ce que**
les surfaces antagonistes (7) des organes d'écartement (8) sont des garnitures (10) en matière résistant à l'usure fixées de manière amovible sur les pièces correspondantes (4b, 5b) des bras de préhension (4, 5).

4. Etoile de transport selon la revendication 3,
**caractérisée en ce que**
les garnitures (10) sont munies de bossages (11) et/ou de cavités pour fixer les organes d'écartement (8) en position de fermeture.

5. Etoile de transport selon l'une des revendications 1 à 4,
**caractérisée en ce que**
les articulations (12) entre les pièces (4a, b ; 5a, b) des bras de préhension (4, 5) sont concentriques au palier de basculement (13) des bras de préhension (4, 5).

6. Etoile de transport selon l'une des revendications 1 à 5 ?
**caractérisée en ce que**
les éléments de ressort (9, 9a) sont formés par des coussinets ou des barrettes sollicités en pression, réalisés en matière élastique.

7. Etoile de transport selon les revendications 5 ou 6,
**caractérisée en ce que**
chaque bras de préhension (4, 5) comporte au moins une premier pièce (4a, 5a) sous la forme d'un double levier et une seconde pièce, (4b, 5b) sous la forme d'un levier simple, et
les éléments élastiques (9, 9a) sont placés entre les zones voisines des pièces (4a, b ; 5a, b).

8. Etoile de transport selon la revendication 7,
**caractérisée en ce que**
les pièces (4a, 5a) en forme de double levier portent la surface de préhension (6) et les pièces (4b, 5b) en forme de levier simple portent la surface antagoniste (7).

9. Etoile de transport selon les revendications 7 ou 8,
**caractérisée en ce que**
les pièces (4b, 5b) en forme de levier simple sont dirigées essentiellement radialement vers l'intérieur.

10. Etoile de transport selon les revendications 1 à 9,
**caractérisée en ce que**
les organes d'écartement (8) sont constitués par des cames montées à rotation sur le corps de base (3), parallèlement aux axes de pivotement des bras de préhension (4, 5).

11. Etoile de transport selon la revendication 10,
**caractérisée en ce que**
les organes d'écartement (8) sont reliés solidairement en rotation à un levier de commande (26) qui produit une rotation de l'organe d'écartement (8) et ainsi l'ouverture ou la fermeture des bras de préhension (4, 5) avec les goujons de butée (27, 28) installés de manière fixe ou commandés sur la trajectoire de l'étoile de transport (1).

12. Etoile de transport selon l'une des revendications 1 à 11,
**caractérisée en ce que**
chacun des bras de préhension (4, 5) comporte au moins deux premières pièces (4a, 5a) qui peuvent pivoter l'une par rapport à l'autre.

13. Etoile de transport selon la revendication 12,
**caractérisée en ce que**
toutes les pièces (4a, 5a) en forme de double levier d'un bras de préhension (4, 5) s'appuient par au moins un élément de ressort (9a) sur leur unique pièce (4b, 5b) en forme de levier simple.
